Europäisches Patentamt

European Patent Office

Office européen des brevets

(19)

(11) Publication number: **0 432 115 A1**

# (12) EUROPEAN PATENT APPLICATION

(21) Application number: 90830572.5

(22) Date of filing: 07.12.90

(51) Int. Cl.⁵: **E04D 1/16, E04D 1/34, F16B 21/09, F16B 15/02**

(30) Priority: 07.12.89 IT 4018089

(43) Date of publication of application:
**12.06.91 Bulletin 91/24**

(84) Designated Contracting States:
**AT BE CH DE ES FR GB LI NL**

(72) Inventor: **Dal Santo, Giorgio Marcello**
**Via Abetone Superiore, 287**
**I-41053 Maranello (Modena) (IT)**

(74) Representative: **Lanzoni, Luciano**
**c/o BUGNION S.p.A. Viale Trento Trieste, 25**
**I-41100 Modena (IT)**

(71) Applicant: **Dal Santo, Giorgio Marcello**
**Via Abetone Superiore, 287**
**I-41053 Maranello (Modena) (IT)**

(54) **Elements for roof covering.**

(57) The elements relate to roof covering, in particular for coverings where the elements (1) are partially reciprocally overlapping. Each element (1) is flat and is provided with distancing means (17) and (18), in the areas destined to be partially overlapping (13) and (14) with the contiguous elements (1), which means (17) and (18) have the function of maintaining at a preestablished distance the reciprocally facing surfaces of the two partially overlapping elements (1).

Fig.2

EP 0 432 115 A1

The invention relates to elements for roof covering. Specifically, but not exclusively, these elements are useful for the covering of roofs requiring flat elements to be fixed to the structure of the roof in a way which envisages each element's partial overlapping by another element.

The normal reciprocal positioning of the elements favours the liquid's flowing downwards, from the element above to the element below, in such a way that said liquid, usually rainfall or snow, cannot come into direct contact with the underlying structure (the roof or wall).

One of the drawbacks in the prior art with regard to the use of substantially flat elements arranged to be partially overlapping is the concurrence of the phenomenon of capillary action, which involves the rising of the liquid between the surfaces in contact, that is of the contact area of two continuous elements.

To overcome this drawback, when, as in many cases the possibility of sealing the touching surfaces has been discounted because of its impracticability, the priort art has calculated the overlapping area of the contiguous elements so that it exceeds the maximum penetration level of the liquid after capillary action.

This prior art solution results in an extensive area of overlapping roof elements and gives rise to the twin drawbacks of heaviness with regard to total roof covering and elevated costs, since the number of elements needed to cover a roof surface area is increased with regard to the number of elements which would be needed to cover the same area if one element were placed in contact and next to the other, that is without overlapping.

Further aim of the present invention is to create a fixing system for the elements to the structure to be roofed, which fulfills the following requirements :

(1) ease and simplicity of application ;

(2) the possibility of easy substitution of each single element without the necessity of moving the contiguous elements ;

(3) hidden fixtures.

Advantage of the present invention i its ability to be adapted to different element peripheral shapes.

Further characteristics and advantages will better emerge in the detailed description that follows, of a number of preferred, but not exclusive embodiments of the invention, here illustrated in the form of non-limiting examples in the attached diagrams, in which :

- Figure 1 shows a frontal view relative to a covering realised with elements coupled according to a first embodiment which envisages partial overlapping.

- Figure 2 shows, in enlarged scale, a schematic partial section according to plane I-I ;

- Figure 3 shows, in further enlarged scale, a detail of figure 2 ;

- Figure 4 shows part of a schematic section according to plane III-III of figure 3 ;

- Figures 5, 6, 7 and 8 show four schematic sections according to plane I-I of figure 1, analogous to the section of figure 2, relative to four different forms of realisation ;

- Figure 9 shows a frontal view of a covering realised with the same elements as in figure 1, but according to a different scheme which however also envisages a partial overlapping ;

- Figure 10 shows a frontal view of a covering realised with elements of different shape but using a composition technique similar to that of figure 9.

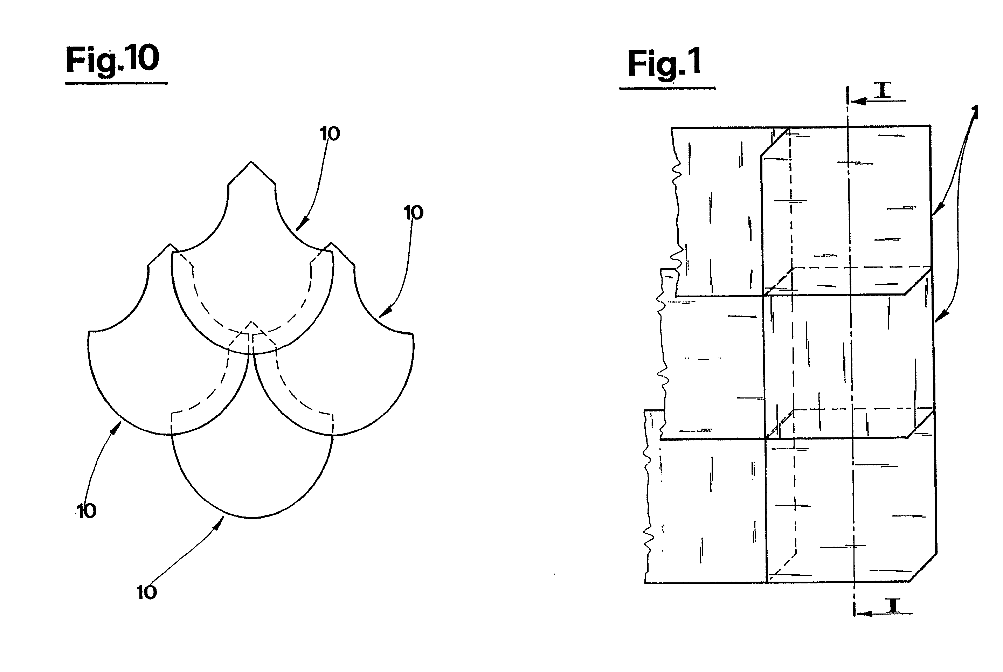

With reference to the illustrations, in fig. 1 a flat element is indicated, consisting, in the example, of a ceramic tile. The element 1 is destined to be coupled with other identical elements to form, for example, the covering of a roof, through a placing of the elements 1 which envisages their partial overlapping. Said element 1 has an upper surface 11 and a lower surface 12 on which are evidenced the two partially overlapping areas 13 and 14. In particular, area 13 is arranged on the upper surface 11 so that it will be overlapped by the overlapping area 14 of another element 1 placed above it. Overlapping area 14 of element 1 is arranged on its lower surface 12 in such a way that it covers the corresponding partially overlapping area 13 of the element 1 situated below it. The two surfaces 15 and 16 of the two partially overlapping areas 13 and 14 are located at a reciprocal distance determined by the presence of protruding reliefs 17 and 18. Said protruding reliefs 17 and 18 are proportioned so that, with the overlapping of the two elements 1, a sufficient distance is obtained between the two reciprocally facing surfaces 15 and 16 to prevent the onset of capillary action. An analogous situation is possible with the elements 20 of fig 5, which have reliefs 27 and 28 performing the same function as reliefs 17 and 18 in the previous embodiment.

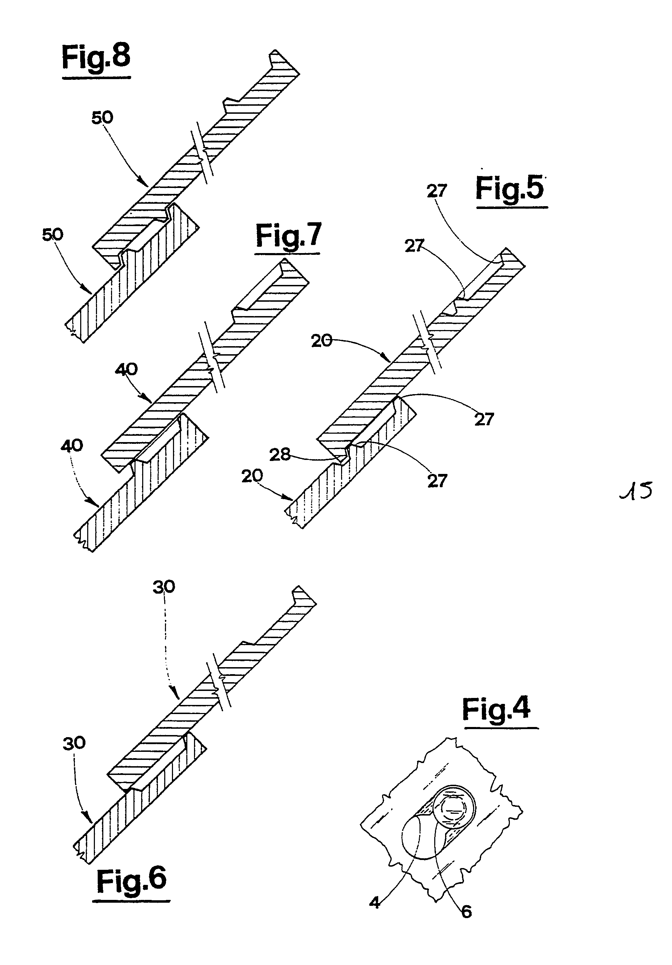

The conformation and positioning of the reliefs in the areas of partial overlapping 13 and 14 can be various as illustrated with elements 30, 40 and 50 of figures 6, 7 and 8. Although there are differences in all the forms of realisation illustrated in the above diagrams, the arrangement of the reliefs in the overlapping areas of the elements has the same aim of creating a distance between the two reciprocally facing surfaces 15 and 16 which prevents the onset of capillary action.

Like all the other elements, element 1 is equipped to permit its anchoring to the structure 2 on which the covering is to be installed ; this anchoring is usually achieved by means of connecting organs 3, normally nails or screws which are fixed to the structure 2 itself. In area 13 the element 1 is equipped with a series of holes having the form of keyhole slots 4 into which the connecting organs 3 can be inserted. The keyhole slots 4 have a straight variable section which in the part destined to be higher with regard to the structure to be covered is just wide enough to receive the cylindrical body 5 of the connecting organ 3, while the part destined to be located lower with regard to the structure to be covered is wide enough to receive the head 6 of the nail of screw of said connecting organ 3, which is wider than its cylindrical body 5. This permits of the removal of the element 1 by a simple action of sliding in an upwards direction until the head 6 of the nail or screw of the connecting organ 3 is in position in the lower, wider part of the keyhole slot 4 and can be removed from the structure 2 by lifting in a parallel direction with respect to the connecting organ 3. The above-described operation can be performed on any one of the elements 1 without the need to displace the contigous elements 1.

This operation is also made possible by the fact that the connecting organ 3 is provided with a stop 7 positioned below the cylindrical body 5 in order that during assembly said cylindrical body 5 does not penetrate into the structure 2 ; in this way the head 6 is brought into a pre-established position with respect to the surface of said structure 2 on which element 1 is to be fixed. The distance between the stop 7 and the lower surface of the head 6 is pre-etablished in such a way that it is not inferior to the width of the element 1 in the area of the keyhole slots 4 where the connecting organ 3 is lodged. This also performs the function of realising the fixing of the element 1 to the structure 2 without making said fixing too rigid and therefore not permitting a certain movement and deformation of the element 1. This possibility of movement and deformation is of notable importance where the elements 1 to be used are made of ceramic material.

The system whereby the single elements 1 are fixed to the structure 2 within the partial overlapping area 13 and 14 means that the fixing is not externally visible. This does not in any way comprise the ease and simplicity of substitution of the single elements 1, which can be executed without disturbing the adjacent elements.

Thanks to the use of reliefs 17 and 18 which keep the elements 1 distanced one from the other in the partial overlapping area 13 and 14, said partial overlapping area 13 and 14 can be kept to a minimum, therefore also minising, with respect to the prior art, the number of elements 1 necessary for the entire convering.

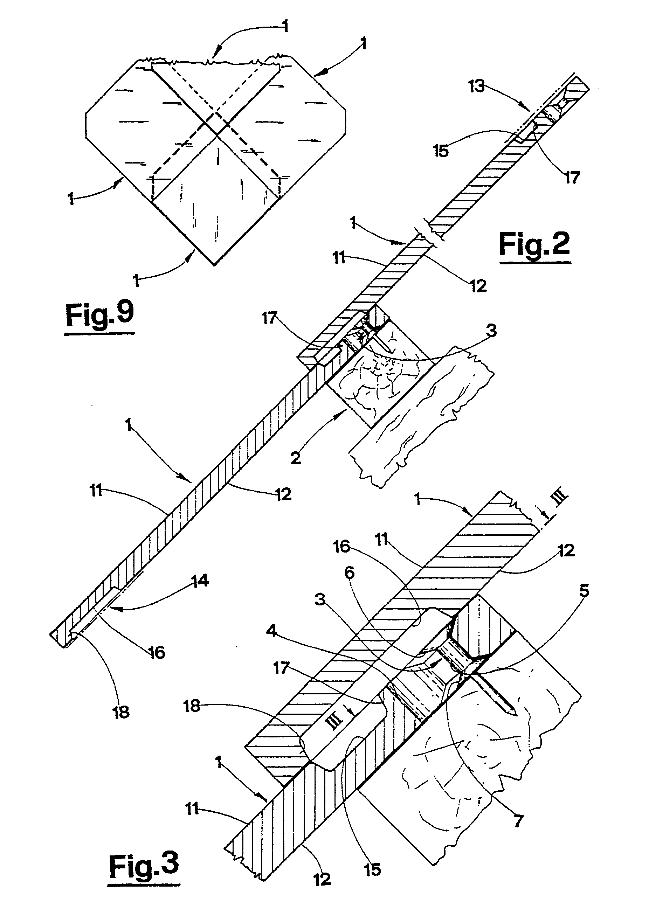

In fig 9 a different arrangement of the elements 1 is shown. Fig 10 shows a similar arrangement to that in fig 9, with differently-shaped elements 10.

The characteristics of the invention do not depend on the nature of the material used for making them.

## Claims

1. Elements for roof covering, wherein a partially overlapping arrangement of the elements is envisaged according to pre-etablished schemes, having a flat form and having, in proximity to at least part of the areas 13 and 14 destined to be partially overlapping with respect to contiguous elements, distancing means arranged in order to maintain the lower surface of the upper element and the upper surface of the lower element 15 and 16, reciprocally facing, at a pre-etablished distance in the partial overlapping areas 13 and 14 ; said partial overlapping areas 13 and 14 being arranged to permit the anchoring of a single element 1 by means of connecting organs, normally nails or screws 3, on the underlying structure 2 on which the covering is to be applied.

2. Elements as in claim 1, each comprising in the partial overlapping areas13 and 14 at least one keyhole slot 4 able to receive the upper part of one said connecting organ 3 which comprises a head 6 having, at least in transversal direction with regard to the axis of the keyhole slot 4 a transversal dimension which is larger than that of the underlying cylindrical body 5 of the same connecting organ 3 ; said keyhole slot 4 being shaped in such a way as to receive said cylindrical body 5 and presenting in at least one pre-etablished direction a dimension which is marginally superior to that of the largest dimension of the head 6 permitting of the free introduction (removal) of the head 6 into the keyhole slot 4 only when these two are positioned in such a way that the circumference of the head 6 is contained within the normal axial direction of the keyhole slot 4.

3. Elements as in claim 2, comprising a plurality of said keyhole slots 4 arranged parallel one to the other ; said keyhole slots 4 presenting a variable section which, in the part destined to be positioned higher during application to the structure 2 to be covered, is of a width just sufficient to receive the cylindrical body 5 of said connecting organ 3, while in the part destined to be located lower during application to the structure 2 to be covered, is of sufficient width to permit the passage of the head 6, larger than the cylindrical body 5, of the said connecting organ 3 ; said cylindrical body 5 having a stop 7 arranged to come into contact with the surface of the structure 2 on which the covering is to be fixed so that the distance between said stop 7 and the lower surface of the head 6 is not inferior to the width of the element 1 in the vicinity of the keyhole slot 4.

4. Elements as in claim 1, wherein said distancing means are so arranged as to maintain the two reciprocally facing surfaces 15 and 16 in the partially overlapping areas 13 and 14 of two contiguous elements 1 at a reciprocal distance which is sufficiently large to prevent the onset of capillary action between said surfaces 15 and 16.

5. Elements as in claim 4, wherein said distancing means comprise protruding reliefs 17 and 18 with respect to the two surfaces 15 and 16 of the partially overlapping areas 13 and 14 of the elements 1.

6. Element as in one of the preceding claims, wherein ceramic material is used for the construction of said element.

## Fig.10

## Fig.1

EP 0 432 115 A1

**Fig.8**

50

50

**Fig.7**

40

40

**Fig.5**

27

27

27

27

28

20

20

15

**Fig.4**

**Fig.6**

30

30

4

6

**Fig.9**

**Fig.2**

**Fig.3**

7

EP 0 432 115 A1

**European Patent Office** EUROPEAN SEARCH REPORT Application Number

EP 90 83 0572

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | AT-B- 388 590 (S.F.S. STADLER) * Page 4, lines 7-18,35-41; figure 2 * | 1,6 | E 04 D 1/16 |
| Y | | 2,3,4,5 | E 04 D 1/34 |
| | --- | | F 16 B 21/09 |
| Y | DE-A-3 414 845 (LEIPPOLD) * Entire document * | 2,3 | F 16 B 15/02 |
| | --- | | |
| Y | DE-A-1 709 086 (REDLAND TILES) * Page 3, paragraphes 2,3; page 4, paragraphe 1; figures 1-3 * | 4,5 | |
| | --- | | |
| A | GB-A- 840 179 (McKNIGHT) * Page 2, lines 48-84; figures 1-3 * | 1,4,5 | |
| | --- | | |
| A | DE-U-8 414 245 (SCHRÖER) * Claims 7,8; figures 2,4,5 * | 1,2 | |
| | --- | | |
| A | FR-A- 910 324 (DUPONT) * Page 2, lines 2-29; figures 1-4 * | 2,3 | |
| | --- | | |
| A | US-A-1 589 719 (RITTER) * Figures 5,6 * | 2,3 | TECHNICAL FIELDS SEARCHED (Int. Cl.5) E 04 D F 16 B |
| | ----- | | |

The present search report has been drawn up for all claims

| Place of search | Date of completion of the search | Examiner |
|---|---|---|
| THE HAGUE | 01-02-1991 | HENDRICKX X. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)